# EUROPEAN PATENT APPLICATION

(11) **EP 4 035 571 A1**
(43) Date of publication of application: **03.08.2022**
(21) Application number: 20868980.2
(22) Date of filing: 25.09.2020
(51) Int. Cl.: A47G 21/04

(54) **PULP MOLDED FOLDING SPOON**

(30) Priority: 25.09.2019 CN 201921603937 U
(71) Applicant: Be Green Packaging Co., Ltd., Jiangsu 221200 (CN)
(72) Inventor: LI, Jinmeng, Xuzhou, Jiangsu 221200 (CN); LIU, Zhijia, Xuzhou, Jiangsu 221200 (CN); TONG, Ji, Xuzhou, Jiangsu 221200 (CN)
(74) Representative: Asquith, Julian Peter
(86) International application number: PCT/CN2020/117708
(87) International publication number: WO 2021/057895

(57) **Abstract**

A pulp molded folding spoon, comprising a holding portion (1) and a spoon bowl (2) connected to the front end of the holding portion (1). The holding portion (1) comprises a sheet-like body (10); the front end of the sheet-like body (10) is connected to the opening of the spoon bowl (2); the sheet-like body (10) is provided with a Y-shaped folding line (11) distributed in the length direction of the sheet-like body (10), and a reinforcing rib I (12) is located between two opposite folding lines of the Y-shaped folding line (11). The structural strength can be improved and the service life can be prolonged.

## Description

### Field of the invention

The utility model belongs to the technical field of plant fiber spoons, in particular to a pulp molded folding spoon.

### Background of the invention

Plant fiber shows many advantages, such as being decomposable.

Today, people pay more and more attention to environmental protection and health.

Many vessels are made of plant fibers, which can also be called pulp molded vessels, such as dinner plates, coffee cup covers and coffee cups. Of course, spoons also can be made of plant fiber. For the plant fiber spoons in prior art, their structure generally includes:
a holding portion and a spoon bowl connected to the front end of the holding portion. Such spoons can meet usage requirements to a certain extent, but they have many defects as follows:
Due to the limitation on thickness of the holding portion, it tends to bend when in use;
Furthermore, the connection between the holding portion and the spoon bowl also tends to bend.

The above defects make the spoons subject to great restrictions on use.

### Summary of the Invention

The purpose of the utility model is to provide a pulp molded folding spoon with improved structural strength and prolonged service life against above-mentioned problems.

The technical solution adopted by the present utility model to achieve the above purpose follows: a pulp molded folding spoon, comprising a holding portion and a spoon bowl connected to the front end of the holding portion, and the holding portion includes:
a sheet-like body, the front end of the sheet-like body is connected to the opening of the spoon bowl;
the sheet-like body is provided with a Y-shaped folding line distributed in the length direction of the sheet-like body;
and a reinforcing rib I is located between the two opposite folding lines of the Y-shaped folding line.

In a preferred embodiment, the reinforcing rib I protrudes downward from the lower surface of the sheet-like body, and a concave groove I corresponding to the reinforcing rib I is arranged on the upper surface of the sheet-like body.

In a preferred embodiment, the front end of the concave groove I communicates with the spoon bowl, and the rear end of the concave groove I is located in the front side of the intersection of the two opposite folding lines.

In a preferred embodiment, the depth of the concave groove I is gradually deepened from the rear end of the concave groove I to the front end of the concave groove I; the height of the downward protrusion of the reinforcing rib I is gradually reduced from the front end of the reinforcing rib I to the rear end of the reinforcing rib I.

In a preferred embodiment, the depth of the end of the concave groove I which communicates with the spoon bowl is less than the depth of the spoon bowl.

In a preferred embodiment, the width of the concave groove I is gradually reduced from the front end of the concave groove I to the rear end of the concave groove I; the width of the reinforcing rib I is gradually reduced from the front end of the reinforcing rib I to the rear end of the reinforcing rib I.

In a preferred embodiment, the Y-shaped folding line comprises a Y-shaped folding line groove arranged on the upper surface of the sheet-like body and a Y-shaped folding line lower protrusion arranged on the lower surface of the sheet-like body and corresponding to the Y-shaped folding line groove.

In a preferred embodiment, the rear side of the inner bottom of the spoon bowl has a circular upper plane and an arc-shaped concave surface connected with the circular upper plane. The outer bottom of the spoon bowl has a circular lower plane corresponding to the circular upper plane and an arc-shaped convex surface corresponding to the arc-shaped concave surface.

In a preferred embodiment, the sheet-like body is provided with two reinforcing ribs II arranged along the length direction of the sheet-like body, the convex direction of the reinforcing ribs II is consistent with the convex direction of the reinforcing rib I, and the upper surface of the sheet-like body is provided with concave grooves II corresponding to the reinforcing ribs II one by one.

In a preferred embodiment, the two reinforcing ribs II are symmetrically arranged at the end of the Y-shaped folding line which is close to the rear end of the sheet-like body.

Compared with the prior art, the pulp molded folding spoon in the present invention has the advantages as follows:
Both sides of the lower surface of the sheet-like body are subjected to force and close together along the Y-shaped folding line. This structure can greatly improve the structural strength of the holding portion and avoid the bending deformation caused by excessive liquid or food in the spoon bowl.

The reinforcing rib I can strengthen the structure of the joint between the sheet-like body and the spoon bowl, and can avoid bending deformation, which greatly improves the structural strength and prolongs the service life, and can be widely applied.

### Brief description of the drawings

Fig. 1 is a perspective schematic diagram of upper surface of the pulp molded folding spoon in the present invention;
Fig. 2 is a schematic diagram of the pulp molded folding spoon in the present invention;
Fig. 3 is a schematic sectional diagram along the line A-A in Fig. 2 ;
Fig. 4 is a perspective schematic diagram of lower surface of the pulp molded folding spoon in the present invention;

In these figures, holding portion 1, sheet-like body 10, Y-shaped folding line 11, Y-shaped folding line groove 110, Y-shaped folding line lower protrusion 111, reinforcing rib I 12, concave groove I 13, reinforcing rib II 14, concave groove II 15, spoon bowl 2, circular upper plane 20, arc-shaped concave surface 21, circular lower plane 22, and arc-shaped convex surface 23 are included.

### Detailed description of preferred embodiment

The following are specific embodiments of the utility model and further describe the technical scheme of the utility model with reference to the drawings, but the utility model is not limited to these embodiments.

The specific embodiments described herein are only examples of the spirit of the utility model. Those skilled in the technical field of the utility model can make various modifications or supplements to the described specific embodiments or adopt similar methods to replace them, without deviating from the spirit of the utility model or beyond the scope defined in the claims.

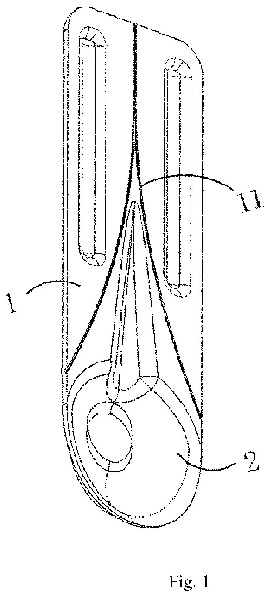

As shown in Fig. 1, the present pulp molded folding spoon comprises a holding portion 1 and a spoon bowl 2 connected to the front end of the holding portion 1, the holding portion 1 and the spoon bowl 2 are integrally formed and made of plant fiber.

The notch of the spoon bowl 2 is provided with an outward flanging edge, and the design is more reasonable.

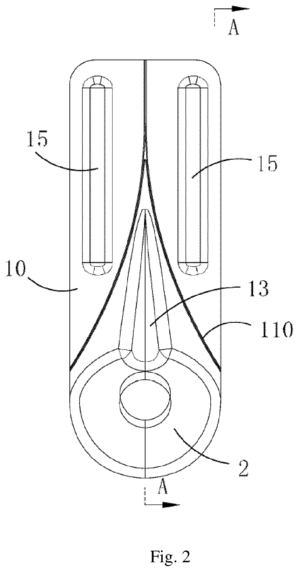

As shown in Fig. 1 and Fig. 2,

The holding portion 1 comprises:
a sheet-like body 10, the front end of the sheet-like body 10 is connected to the opening of the spoon bowl 2; the width of the sheet-like body 10 is consistent with that of the opening of the spoon bowl 2.

The sheet-like body 10 is provided with a Y-shaped folding line 11 distributed in the length direction of the sheet-like body 10; In actual use, a user holds it by hand and exerts opposing force, that is, both sides of the lower surface of the sheet-like body 10 are subjected to force and close together along Y-shaped folding line 11, that is, through the preformed Y-shaped folding line 11, fold in half from both sides of the middle straight line to the middle. The spoon will change from a flat expanded shape to a three-dimensional practical spoon with a tilted spoon mouth due to the traction of the Y-shaped folding line 11. This structure can greatly improve the structural strength of the holding portion and avoid the bending deformation caused by excessive liquid or food in the spoon bowl.

Furthermore, the folding formed spoon is characterized in that it is in a flat state during storage, and will turn into a three-dimensional state by pinching and folding by the user.

After the folding formed spoon changes from flat state to the three-dimensional state, the strength will also become very high due to the folded shape, so it does not tend to fail due to twists when taking food.

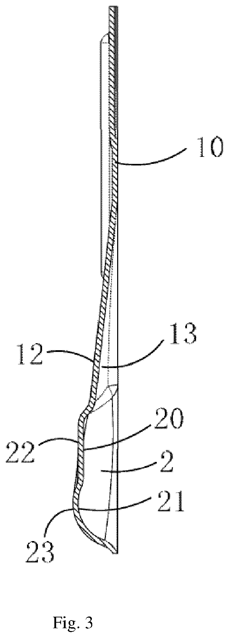

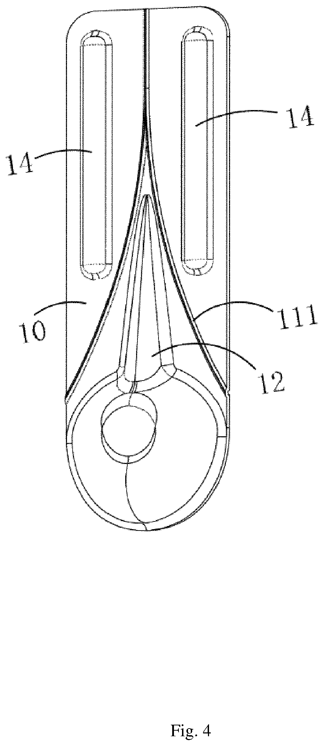

As shown in Fig. 3 and Fig. 4, and a reinforcing rib I 12 located between the two opposite folding lines of the Y-shaped folding line 11.

When the above-mentioned sides close together, the reinforcing rib I 12 can strengthen the structure of the joint between the sheet-like body 10 and the spoon bowl 2, and can avoid bending deformation, which greatly improves the structural strength and prolongs the service life, and can be widely applied.

In a preferred embodiment, the reinforcing rib I 12 protrudes downward from the lower surface of the sheet-like body 10, and a concave groove I 13 corresponding to the reinforcing rib I 12 is arranged on the upper surface of the sheet-like body 10.

The design of the reinforcing rib I 12 and the concave groove I 13 can save raw materials and facilitate the development and manufacture of molds and subsequent demolding.

Of course, the reinforcing rib I 12 can also be convex upward, while the concave groove I 13 is arranged on the lower surface of the sheet-like body 10, which also meets the requirements of application and manufacturing.

Further, the front end of the concave groove I 13 communicates with the spoon bowl 2, and the rear end of the concave groove I 13 is located in the front side of the intersection of the two opposite folding lines.

Communication between them can facilitate the development of mold and subsequent demolding.

As shown in Fig. 1 and Fig. 3,

Still further, the depth of the concave groove I 13 is gradually deepened from the rear end of the concave groove I 13 to the front end of the concave groove I 13; the height of the downward protrusion of the reinforcing rib I 12 is gradually reduced from the front end of the reinforcing rib I 12 to the rear end of the reinforcing rib I 12.

Secondly, the depth of the end of the concave groove I 13 which communicates with the spoon bowl 2 is less than the depth of the spoon bowl 2.

Additionally, the width of the concave groove I 13 is gradually reduced from the front end of the concave groove I 13 to the rear end of the concave groove I 13; the width of the reinforcing rib I 12 is gradually reduced from the front end of the reinforcing rib I 12 to the rear end of the reinforcing rib I 12.

In a preferred embodiment, the Y-shaped folding line 11 comprises a Y-shaped folding line groove 110 arranged on the upper surface of the sheet-like body 10 and a Y-shaped folding line lower protrusion 111 arranged on the lower surface of the sheet-like body 10 and corresponding to the Y-shaped folding line groove 110.

The groove depth of the Y-shaped folding line groove 110 is less than the thickness of the sheet-like body 10.

In a preferred embodiment, the rear side of the inner bottom of the spoon bowl 2 has a circular upper plane 20 and an arc-shaped concave surface 21 connected with the circular upper plane. The outer bottom of the spoon bowl 2 has a circular lower plane 22 corresponding to the circular upper plane 20 and an arc-shaped convex surface 23 corresponding to the arc-shaped concave surface 21.

That is, the circumferential rear side of the circular upper plane 20 is connected with the groove wall of the spoon bowl 2, while the remaining circumferential side of the circular upper plane 20 is connected with the arc-shaped concave surface 21.

As shown in Fig. 2 and Fig. 4,

In a preferred embodiment, the sheet-like body 10 is provided with two reinforcing ribs II 14 arranged along the length direction of the sheet-like body 10, the convex direction of the reinforcing ribs II 14 is consistent with the convex direction of the reinforcing rib I 12, and the upper surface of the sheet-like body 10 is provided with concave grooves II 15 corresponding to the reinforcing ribs II 14 one by one.

The reinforcing ribs II 14 are strip-shaped.

Further, the two reinforcing ribs II 14 are symmetrically arranged at the end of the Y-shaped folding line 11 which is close to the rear end of the sheet-like body 10.

Similarly, the reinforcing ribs II 14 may protrude upward.

The reinforcing ribs II 14 can further improve the structural strength and also improve the contact stability after contacting with human hands.

## Claims

1. A pulp molded folding spoon, comprising a holding portion (1) and a spoon bowl (2) connected to the front end of the holding portion (1), **characterized in that** the holding portion (1) comprises:
a sheet-like body (10), the front end of the sheet-like body (10) is connected to the opening of the spoon bowl (2);
the sheet-like body (10) is provided with a Y-shaped folding line (11) distributed in the length direction of the sheet-like body (10);
and a reinforcing rib I (12) is located between two opposite folding lines of the Y-shaped folding line (11).

2. The pulp molded folding spoon according to claim 1, **characterized in that** the reinforcing rib I (12) protrudes downward from the lower surface of the sheet-like body (10), and a concave groove I (13) corresponding to the reinforcing rib I (12) is arranged on the upper surface of the sheet-like body (10).

3. The pulp molded folding spoon according to claim 2, **characterized in that** the front end of the concave groove I (13) communicates with the spoon bowl (2), and the rear end of the concave groove I (13) is located in the front side of the intersection of the two opposite folding lines.

4. The pulp molded folding spoon according to claim 3, **characterized in that** the depth of the concave groove I (13) is gradually deepened from the rear end of the concave groove I (13) to the front end of the concave groove I (13); the height of the downward protrusion of the reinforcing rib I (12) is gradually reduced from the front end of the reinforcing rib I (12) to the rear end of the reinforcing rib I (12).

5. The pulp molded folding spoon according to claim 4, **characterized in that** the groove depth of the end of the concave groove I (13) which communicates with the spoon bowl (2) is less than the depth of the spoon bowl (2).

6. The pulp molded folding spoon according to claim 4, **characterized in that** the width of the concave groove I (13) is gradually reduced from the front end of the concave groove I (13) to the rear end of the concave groove I (13); the width of the reinforcing rib I (12) is gradually reduced from the front end of the reinforcing rib I (12) to the rear end of the reinforcing rib I (12).

7. The pulp molded folding spoon according to claim 1, **characterized in that** the Y-shaped folding line (11) comprises a Y-shaped folding line groove (110) arranged on the upper surface of the sheet-like body (10) and a Y-shaped folding line lower protrusion (111) arranged on the lower surface of the sheet-like body (10) and corresponding to the Y-shaped folding line groove (110).

8. The pulp molded folding spoon according to claim 1, **characterized in that** the rear side of the inner bottom of the spoon bowl (2) has a circular upper plane (20) and an arc-shaped concave surface (21) connected with the circular upper plane; the outer bottom of the spoon bowl (2) has a circular lower plane (22) corresponding to the circular upper plane (20) and an arc-shaped convex surface (23) corresponding to the arc-shaped concave surface (21).

9. The pulp molded folding spoon according to claim 1, **characterized in that** the sheet-like body (10) is provided with two reinforcing ribs II (14) arranged along the length direction of the sheet-like body (10), the convex direction of the reinforcing ribs II (14) is consistent with the convex direction of the reinforcing rib I (12), and the upper surface of the sheet-like body (10) is provided with concave grooves II (15) corresponding to the reinforcing ribs II (14) one by one.

10. The pulp molded folding spoon according to claim 1, **characterized in that** the two reinforcing ribs II (14) are symmetrically arranged at the end of the Y-shaped folding line (11) which is close to the rear end of the sheet-like body (10).
